# EUROPÄISCHE PATENTSCHRIFT

(11) **EP 1 695 109 B1**
(45) Veröffentlichungstag und Bekanntmachung des Hinweises auf die Patenterteilung: **16.12.2015**
(21) Anmeldenummer: 04803974.7
(22) Anmeldetag: 16.12.2004
(51) Int. Cl.: G01S 7/481, G01S 7/486

(54) **VORRICHTUNG ZUM MESSEN DER DISTANZ ZU FERNEN UND NAHEN OBJEKTEN**
DEVICE FOR MEASURING THE DISTANCE TO FAR-OFF OBJECTS AND CLOSE OBJECTS
DISPOSITIF POUR MESURER LA DISTANCE A DES OBJETS PROCHES ET ELOIGNES

(30) Priorität: 19.12.2003 CH 219303
(43) Veröffentlichungstag der Anmeldung: 30.08.2006
(73) Patentinhaber: Leica Geosystems AG, 9435 Heerbrugg (CH)
(72) Erfinder: HINDERLING, Jürg, CH-9437 Marbach (CH); BENZ, Paul, CH-9444 Diepoldsau (CH); BÜRKI, Marcel, CH-9434 AU (CH)
(74) Vertreter: Harmann, Bernd-Günther
(86) Internationale Anmeldenummer: PCT/EP2004/014362
(87) Internationale Veröffentlichungsnummer: WO 2005/064359

(56) Entgegenhaltungen:
- EP-A- 0 448 111
- EP-A- 0 635 729
- EP-A- 0 768 542
- WO-A-01/29576
- WO-A-03/002939
- DE-A- 4 316 348
- DE-A- 10 128 484
- DE-A- 19 840 049

## Beschreibung

Die Erfindung betrifft eine Vorrichtung zum Messen der Distanz zu nahen und fernen Objekten, an denen von der Vorrichtung modulierte und ausgesendete Laserstrahlen reflektiert werden, nach dem Oberbegriff der Ansprüche 1 und 4.

Derartige Vorrichtungen zum Messen der Distanz zu einem Objekt mit einer Genauigkeit innerhalb weniger Millimeter sind seit langem bekannt und werden heute in grosser Zahl für unterschiedlichste Anwendungen, insbesondere im Vermessungs- und Bauwesen, eingesetzt. Zum Messen der Distanz wird von einer derartigen Vorrichtung ein Sendebündel optischer Strahlen gegen das zu messende Objekt projiziert. Wenigstens ein Teil der Strahlen des Sendebündels wird vom Objekt reflektiert. Über eine Optik der Vorrichtung werden Strahlen eingesammelt, die am Objekt reflektierte Strahlen und störende Hintergrundstrahlen umfassen, und von einem Empfänger der Vorrichtung in ein einziges elektrisches Signal umgewandelt, das ein den jeweiligen Strahlen zuordenbares Nutzsignal bzw. Hintergrundrauschen umfasst. Aufgrund der Ausbreitungsgeschwindigkeit optischer Strahlen kann durch Auswertung des elektrischen Signals die Distanz zum Objekt bestimmt werden.

In Abhängigkeit der jeweiligen Anwendung und des dabei erforderlichen Distanzbereichs wird auf unterschiedliche Arten von Objekten gemessen.

Auf ein Objekt, das die gesendeten Strahlen ungerichtet gestreut zur Vorrichtung zurück reflektiert, lassen sich einerseits Messungen der Distanz in einem Bereich von einigen Zentimetern bis zu einigen hundert Metern durchführen. Ein solches Objekt weist typischer Weise eine natürlich raue Oberfläche auf. Die Distanz wird dabei durch den vom Sendebündel bestrahlten Bereich der Oberfläche bestimmt. Die Grösse des beleuchteten Bereichs bestimmt damit die örtliche Auflösung der Messung auf der Oberfläche des streuend reflektierenden Objekts. Eine hohe örtliche Auflösung ist bei vielen Objekten eine Voraussetzung für eine genaue Messung. Je geringer die Divergenz des Sendebündels ist, umso kleiner ist der beleuchtete Bereich und umso höher ist - gemäss der DE 198 40 049 A1 - im Allgemeinen die prinzipiell erreichbare Genauigkeit der Messung der Distanz auf ein gestreut reflektierendes Objekt.

Auf ein Objekt, das die gesendeten Strahlen gerichtet zur Vorrichtung zurück reflektiert, lassen sich andererseits Distanzmessungen in einem weiten Bereich von einigen Zentimetern bis zu mehreren Kilometern durchführen. Ein gerichtet reflektierendes Objekt ist in der Praxis oft als Eckwürfelprisma aus geschliffenem Glas ausgebildet. Da ein solches Objekt eine um viele Grössenordnungen grössere Retroreflektivität aufweist als ein gestreut reflektierendes Objekt, kann von der Vorrichtung nur das gerichtet reflektierende Objekt selektiv gemessen werden. Auf dieser Eigenschaft basieren heute auch automatische Zielsucheinrichtungen vieler Vermessungsinstrumente. In an sich bekannter Weise muss eine Vorrichtung zum Distanzmessen umso weniger exakt auf ein solches Objekt ausgerichtet sein, je grösser die Divergenz des Sendebündels ausgebildet ist. Ohne ein exaktes Ausrichten der Vorrichtung kann - gemäss der DE 198 40 049 A1 - der Komfort beim Distanzmessen auf ein gerichtet reflektierendes Objekt, insbesondere bei nahen und mittleren Distanzen, erheblich gesteigert werden.

Bei derartigen Vorrichtungen sind zwei unterschiedliche Grundformen der Anordnung des Sendebündels relativ zum Empfangsbündel bekannt. Bei der monoaxialen Grundform ist ein gemeinsames Objektiv für das Empfangsbündel und das Sendebündel vorgesehen. Das Sendebündel ist heute in der Regel mit Hilfe eines zentralen Reflexionselements innerhalb des Empfangsbündels angeordnet. Dafür ist zentrale Reflexionselement in der Regel auf der optischen Achse des gemeinsamen Objektivs angeordnet. Bei der biaxialen Grundform sind hingegen das Empfangsbündel und das Sendebündel in einem Abstand zueinander angeordnet. Dabei ist für das Sendebündel und das Empfangsbündel jeweils separates Objektiv vorgesehen.

Gegenüber der jeweils anderen Grundform weisen beide Grundformen Vor- und Nachteile auf, denen je nach Anwendung unterschiedliche Gewichtung zukommt.

Unabhängig von der Grundform kommt es jedoch bei derartigen Vorrichtungen, wenn keine speziellen Massnahmen getroffen werden, beim Messen auf ein nahes Objekt zu einem Problem beim Detektieren der am Objekt reflektierten Sendestrahlen, da - unabhängig von der Grundform - ab einer gewissen Distanz die vom Empfänger umzuwandelnden, reflektierten Sendestrahlen umso weniger werden, je näher das Objekt bei der Vorrichtung ist. Unterschreitet dabei das den reflektierten Sendestrahlen zugeordnete Nutzsignal eine kritische Stärke, so wird die Genauigkeit oder die Schnelligkeit der Messungen beeinträchtigt oder ein Messen sogar ganz verunmöglicht.

Bei einer Vorrichtung von monoaxialer Grundform kann es aufgrund einer Abschattung durch das zentrale Reflexionselement beim Messen auf ein nahes Objekt zu einem Problem beim Detektieren kommen. Durch das Reflexionselement wird wenigstens einem Teil der vom Objektiv eingesammelten, reflektierten Sendestrahlen der Weg zum Empfänger versperrt. Je näher das zu messende Objekt bei der Vorrichtung ist, umso mehr wandern in der Brennebene des Objektivs die eingesammelten Sendestrahlen vom Zentrum gegen die Peripherie hin weg und können je nach Ausbildung des Empfängers für ein Umwandeln in ein elektrisches Signal verloren gehen. Sowohl bei Messungen auf ein nahes, gerichtet reflektierendes Eckwürfelprismas, auf dessen Ecke das Sendebündel zentrisch ausgerichtet ist, als auch bei Messungen auf ein nahes, gestreut reflektierendes Objekt kann das Nutzsignal einen kritischen Wert unterschreiten. Zur Vermeidung einer solchen Unterschreitung sind unterschiedliche Massnahmen bekannt.

Aus der DE 101 28 484 A1 ist ein Entfernungsmessgerät bekannt, das ein gemeinsames Objektiv, ein als kollimierter Laserstrahl ausgebildetes Sendebündel sowie ein koaxial dazu angeordnetes Empfangsbündel aufweist. Eine Massnahme zur Überwindung des Abschattungsproblems sieht drei nebeneinander angeordnete Lichtleiter vor, deren unterschiedlich grosse Eintrittsflächen nebeneinander in der Brennebene des Objektivs angeordnet sind. Messungen auf ferne Objekte ist dabei die grösste Eintrittsfläche zugeordnet. Die von den Lichtleitern weitergeleiteten Empfangsbündel werden über eine Sammellinse auf einen Detektor abgebildet. Das Empfangsbündel ist durch die drei Eintrittsflächen derart ausgedehnt geformt, dass auch nahe und ferne Objektentfernungen gemessen werden können. Eine alternative Massnahme sieht einen einzigen Lichtleiter mit einer Eintrittsfläche gleicher Ausdehnung vor. Da im Allgemeinen auch der Umfang störender Strahlen des Hintergrunds proportional zur Eintrittsfläche des Lichtleiters ist, ist davor eine Lichtabschirmmaske angeordnet, um das Verhältnis von reflektierten Sendestrahlen und störender Strahlen des Hintergrunds zu verbessern. Die Maske weist eine zentrale Öffnung und mindesten eine seitliche Öffnung auf, deren Durchmesser im Vergleich zur zentralen Öffnung kleiner ausgebildet ist.

Aus der DE 696 08 066 T2 ist ein Abstandsmessgerät bekannt, das ein gemeinsames Objektiv, ein als kollimierter Laserstrahl ausgebildetes Sendebündel sowie ein koaxial dazu angeordnetes Empfangsbündel aufweist. Zum Messen kleiner Abstände auf gestreut reflektierende Objekte ist eine Ablenkvorrichtung vorgeschlagen, die gestreut reflektiertes, von der optischen Achse des Objektivs gewandertes Messlicht wieder gegen die Achse hin ablenkt. Das Vorsehen derartiger Ablenkvorrichtungen verursacht bei der Herstellung solcher Geräte entsprechende Kosten.

Bei einer Vorrichtung von biaxialer Grundform kommt es bei Messungen auf ein nahes Objekt aufgrund einer Parallaxe des zueinander beabstandeten Sende- und Empfangsbündels zu Problemen beim Detektieren. Je näher das zu messende Objekt bei der Vorrichtung ist, umso mehr wandert in der Brennebene das Empfangsbündel weg von der optischen Achse des beabstandeten Sendebündels. Sowohl bei Messungen auf ein nahes, gerichtet reflektierendes Eckwürfelprismas, auf dessen Ecke das Sendebündel zentrisch ausgerichtet ist, als auch bei Messungen auf ein nahes, gestreut reflektierendes Objekt kann das Nutzsignal den kritischen Wert unterschreiten. Aus dem Stand der Technik ist eine Vielzahl ganz unterschiedlicher Massnahmen gegen eine solche Unterschreitung bekannt.

Aus der WO 03 / 002 939 A1 ist eine Vorrichtung zur optischen Distanzmessung von biaxialer Grundform mit einem als kollimierten Laserstrahl ausgebildeten Sendebündel und einem optischen Detektor bekannt, dessen lichtempfindliche Fläche tropfen- oder keilförmig ausgedehnt ausgebildet ist, damit sie einer Strahlverschiebung am Zielobjekt reflektierter Sendestrahlen auch bei kleiner werdenden Zielobjektabständen genügt. Dabei verjüngt sich die Fläche in Richtung der Strahlverschiebung kleiner werdender Zielobjektabstände.

Aus der DE 43 16 348 A1 ist eine Vorrichtung zur Entfernungsmessung von biaxialer Grundform mit einer in der Brennebene bewegbaren Lichtleitfaser bekannt, die dem Empfangsbündel der Vorrichtung in Abhängigkeit der Entfernung zum zu messenden Objekt nachgeführt wird. Diese Massnahme reduziert einerseits die Geschwindigkeit beim Messen und erfordert andererseits eine aufwändige Konstruktion.

Aus der DE 692 25 811 T2 ist eine optische Radareinrichtung für Fahrzeuge bekannt, deren Sendeinrichtung mittels einer Halbleiter-Laserdiode und einer multifokalen Optik auch ein dekollimiertes Sendebündel von Laserstrahlen bereitstellt und damit einen Fahrbahnabschnitt für eine optische Abstandsbestimmung von Hindernissen ausleuchtet. Mit einer derartigen Vorrichtung können kurze bis mittlere Distanzen auf Dezimeter genau bestimmt werden.

Aus der EP 0448 111 A2 ist ein biaxiales LIDAR-Abtast-System zum dreidimensionalen Erfassen und Abbilden von Objekten bekannt. Dieses hat zwei separate Strahlengänge und zwei Abschnitte zum Einsammeln von Strahlenbündeln, die nahen und fernen Objekten zugeordnet sind, wobei der Abschnitt für ein nahes Objekt größer ist als für ein fernes Objekt. Dadurch kann ein sowohl für ferne als auch nahe Objekte gutes Nutzsignal-Hintergrundrauschen-Verhältnis erreicht werden.

Es ist Aufgabe der Erfindung Mängel des Standes der Technik zu beheben und eine einfache Vorrichtung zum Distanzmessen bereitzustellen, mit der auf gerichtet oder gestreut reflektierende Objekte, die sich in einem weiten Bereich von nah bis fern zur Vorrichtung befinden, auf komfortable Weise genau gemessen werden kann.

Die Aufgabe wird durch eine Vorrichtung mit den Merkmalen der Patentansprüche 1 und 4 gelöst.

Beim Messen von Distanzen zu fernen und nahen Objekten werden von einer erfindungsgemässen Vorrichtung modulierte Laserstrahlen ausgesendet, die an den Objekten reflektiert werden. Die Vorrichtung weist ein Objektiv, Mittel zum Auswählen von Strahlen und einen Empfänger auf. Über das Objektiv werden Strahlen eingesammelt, die neben an den Objekten reflektierten Laserstrahlen auch Hindergrundstrahlen umfassen. Aus einem Bündel eingesammelter Strahlen werden über die Mittel diejenigen Strahlen ausgewählt, die einem zusammenhängenden Querschnittbereich des Bündels angehören. Dabei weist der Querschnittbereich einen ersten und wenigstens einen zweiten Abschnitt auf, wobei dem ersten von einem fernen und dem wenigstens zweiten Abschnitt von einem nahen Objekt reflektierte Laserstrahlen zugeordnet sind, und wobei über den zweiten Abschnitt nur ein Bruchteil der eingesammelten, vom nahen Objekt reflektierten Laserstrahlen ausgewählt wird. Über den Empfänger werden ausgewählte Strahlen des Bündels in ein einziges elektrisches Signal umgewandelt, über das mit Hilfe der Ausbreitungsgeschwindigkeit optischer Strahlen die Distanz bestimmbar ist. Gemäss der Erfindung sind die Mittel derart ausgebildet, dass der wenigstens eine zweite zumindest die Ausdehnung des ersten Abschnitts aufweist. Dadurch kann das Bündel ausgewählter Strahlen ausserhalb der Vorrichtung derart geformt werden, dass einerseits für ein komfortables Messen zum nahen Objekt ausreichend reflektierte Sendestrahlen umgewandelt werden und andererseits - insbesondere beim Messen auf ferne Objekte - das Hintergrundrauschen reduziert wird, wodurch der Messbereich der Vorrichtung ausgedehnt werden kann.

Eine weitere Aufgabe der Erfindung ist es eine vorstehend genannte Vorrichtung bereitzustellen, das einen stetigen Verlauf des Nutzsignals mit kleinen Unterschieden in der Stärke des Nutzsignals über den Distanzmessbereich aufweist. Dies kann erreicht werden, indem bei der Ausbildung der Verjüngung - ausgehend vom zweiten zum ersten Abschnitt - die zunehmende Intensität der am zunehmend näheren Objekt reflektierten, eingesammelten Laserstrahlen Berücksichtigung findet.

Zudem soll eine Vorrichtung zum Distanzmessen so weitergebildet werden, dass die Vorrichtung in einem Fernrohr eines Theodoliten integriert werden kann.

Weitere alternative oder vorteilhafte Aus- bzw. Weiterbildungen der Erfindung sind in den Merkmalen der abhängigen Patentansprüche beschrieben.

Nachstehend wird die Erfindung anhand der Figuren rein beispielhaft näher erläutert. Gleiche Gegenstände in unterschiedlichen Ausführungsbeispielen, welche dieselben Funktionen ausüben, sind nachstehend mit gleichen Bezeichnungen und Bezugszeichen versehen. Es zeigen:
- Figur 1: eine schematisch dargestellte Messanordnung mit einem gerichtet reflektierenden Objekt und einer erfindungsgemässen Vorrichtung von monoaxialer Grundform koaxial integriert in ein Fernrohr in Seitenansicht,
- Figur 2: eine vergrösserte Detailansicht erster Mittel zum Auswählen von Strahlen der Vorrichtung aus Figur 1 und ein Bündel projizierter Strahlen in Seitenansicht,
- Figur 3: eine vergrösserte Detailansicht der ersten Mittel aus Figur 2 in Draufsicht,
- Figur 4: einen Querschnitt durch das projizierte Strahlenbündel,
- Figur 5: eine Gegenüberstellung von vier Draufsichten - der Figur 3 entsprechend - denen unterschiedliche Distanzen zum gerichtet reflektierenden Objekt zugrunde liegen,
- Figur 6: eine diagrammatische Gegenüberstellung des Nutzsignal-Hintergrundrauschen-Verhältnis eines elektrischen Signals dreier unterschiedlicher Vorrichtungen in Abhängigkeit der Distanz,
- Figur 7: eine Gegenüberstellung von vier Draufsichten - der Figur 3 entsprechend - bei jeweils unterschiedlichen Distanzen zu einem gestreut reflektierenden Objekt,
- Figur 8: zweite Mittel zum Auswählen von Strahlen mit einer Zylinderlinse vor der Eintrittsfläche einer Lichtleitfaser,
- Figur 9: dritte Mittel zum Auswählen von Strahlen mit einem Lichteinfangtrichter vor der Eintrittsfläche einer Lichtleitfaser,
- Figur 10: vierte Mittel zum Auswählen von Strahlen mit einem zusammen gequetschten Endstück einer Lichtleitfaser,
- Figur 11: eine schematisch dargestellte Messanordnung mit einem gerichtet reflektierenden Objekt und einer erfindungsgemässen biaxialen Vorrichtung von biaxialer Grundform in Seitenansicht,
- Figur 12: eine vergrösserte Detailansicht fünfter Mittel zum Auswählen von Strahlen der Vorrichtung aus Figur 11 in Draufsicht,
- Figur 13: eine Gegenüberstellung von vier Draufsichten auf einen Detektor in der Brennebene des Empfangsobjektivs der Vorrichtung aus Figur 11 bei jeweils unterschiedlichen Distanzen zu einem gerichtet reflektierenden Objekt und
- Figur 14: eine Gegenüberstellung von vier Draufsichten auf einen Detektor in der Brennebene des Empfangsobjektivs der Vorrichtung aus Figur 11 bei jeweils unterschiedlichen Distanzen zu einem gestreut reflektierenden Objekt.

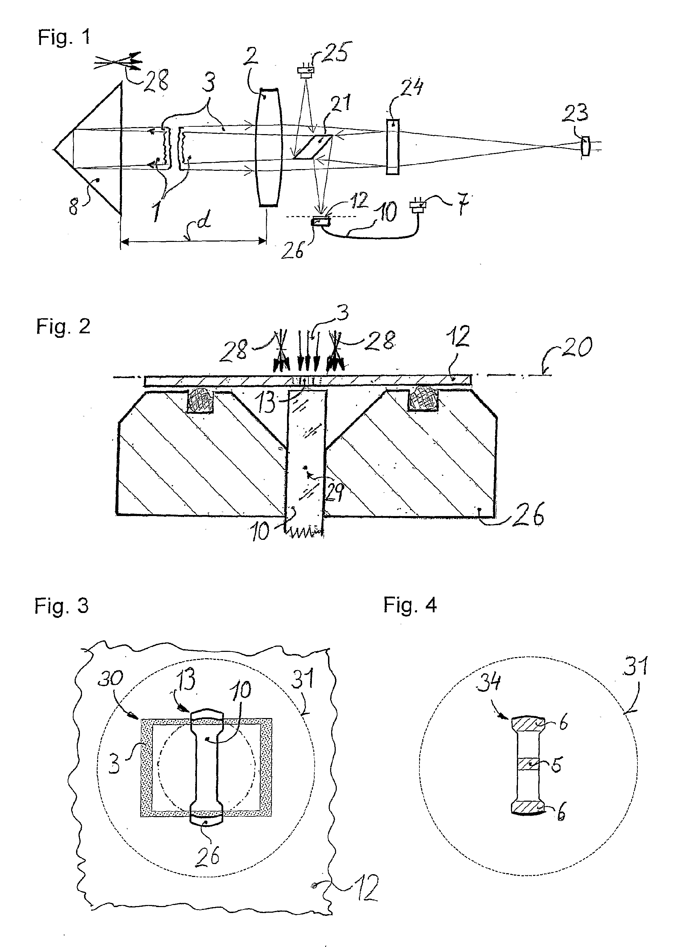

Figur 1 zeigt eine Messanordnung mit einem gerichtet reflektierenden Objekt und einer erfindungsgemässen Vorrichtung zum Messen der Distanz von monoaxialer Grundform, die in einem schematische dargestellten Fernrohr, beispielsweise eines Theodoliten, koaxial integriert ist.

Das gerichtet reflektierende Objekt ist hier als Eckwürfelprisma 8 ausgebildet und befindet sich in einer veränderlichen Distanz d zur Vorrichtung. Das Objekt kann zwischen einer nahen Distanz, von beispielsweise einem Meter, bis zu einer fernen Distanz, von beispielsweise einem Kilometer, von der Vorrichtung entfernt sein. Rein beispielhafte, schematische Darstellungen von Strahlen in den Figuren 1, 2 und 3 basieren auf einer nahen Distanz d von etwa einem Meter. Die Vorrichtung zum Messen ist hier derart im Fernrohr integriert, dass ein Bündel von der Vorrichtung modulierter und zum Eckwürfelprisma 8 ausgesendeter Laserstrahlen 1 koaxial zur Ziellinie der Vorrichtung ist.

In dieser Messanordnung wird das Eckwürfelprisma 8 koinzidierend angemessen. Dabei ist die Ziellinie der Vorrichtung auf das Reflexionszentrum des Eckwürfelprismas 8, das durch dessen Ecke gebildet wird, ausgerichtet. Die ausgesendeten Laserstrahlen 1 werden hier in an sich bekannter Weise am Eckwürfelprisma 8 punktsymmetrisch zur Achse des Bündels reflektiert. Dabei entspricht die Divergenz des Bündels von reflektierten Laserstrahlen 3 der Divergenz des Bündels von ausgesendeten Laserstrahlen 1.

Das Fernrohr mit integrierter Vorrichtung zum Messen der Distanz weist hier eine Laserdiode 25, ein zentrales Reflexionselement 21 von rechteckigem Querschnitt, ein Objektiv 2, einen wellenlängenselektiven Spiegel 24 , eine Blende 12, eine Zentrierfassung 26, eine zylindrische Multimode-Lichtleitfaser 10, einen Empfänger 7, und ein Okular 23 auf.

Die Emissionsfläche der Laserdiode 25 zum Erzeugen modulierter Laserstrahlen ist hier wesentlich vor der senderseitigen Brennebene des Objektivs 2 angeordnet, wodurch die ausgesendeten Laserstrahlen 1 in Form eines dekollimierten Bündels mit einer wesentlichen Divergenz auf das Eckwürfelprisma 8 projiziert werden. Die einzelnen Teilbündel des dekollierten Bündels weisen dabei unterschiedliche Divergenzwinkel auf, die im Wesentlichen proportional zum Relativwinkel der Ausbreitungsrichtung des jeweiligen Teilbündels zur Achse des dekollimierten Bündels sind. Die Divergenz der Teilbündel nimmt dabei ausgehend von der Achse des dekollimierten Bündels, wo die Ausbreitung des Lichtes im Wesentlichen parallel zur Achse verläuft, quer zur Achse stetig zu. Sie weist hier am Rand des Bündels von ausgesendeten Laserstrahlen 1 eine Divergenz von etwa fünf Millirad auf. Wenigstens ein Teil der ausgesendeten Laserstrahlen 1 wird am Eckwürfelprisma 8 reflektiert.

Vom Objektiv 2 werden Strahlen eingesammelt, die wenigstens einen Teil der am Eckwürfelprisma 8 reflektierten Laserstrahlen 3 sowie Hintergrundstrahlen 28 umfassen. Bei der in den Figuren 1, 2 und 3 vorgesehenen Distanz d von einem Meter wird das gesamte dekollimierte Bündel ausgesendeter Laserstrahlen 1 am Eckwürfelprisma 8 zurück reflektiert und das gesamte dekollimierte Bündel reflektierter Laserstrahlen 3 eingesammelt. Nicht alle eingesammelten Strahlen können das zentrale Reflexionselement 21 aufgrund dessen Anordnung hier passieren.

Der Anteil der von an einem Objekt reflektierten, ausgesendeten Strahlen, die ein zentrales Reflexionselement passieren können, werden im Wesentlichen von der Art und Weise der Reflexion des Objekts, von der Divergenz ausgesendeter Strahlen, und nicht zuletzt von der Distanz des Objekts zur Vorrichtung bestimmt.

Die reflektierten Laserstrahlen 3, die das Reflexionselement 21 passiert haben, werden vom wellenlängenselektiven Spiegel 24 zurück gespiegelt, von der Rückseite des zentralen Reflexionselements 21 umgelenkt und auf die Blende 12 projiziert. Wenigstens ein Teil der projizierten Strahlen wird über die Lichtleiterfaser 10 zum Empfänger 7 weitergeleitet und dort in ein elektrisches Signal umgewandelt, aufgrund dessen dann in an sich bekannter Weise die gesuchte Distanz bestimmt wird. Auch bei Figur 1 entsprechenden Vorrichtungen mit einem dekollimierten Bündel von ausgesendeten Laserstrahlen 1 können bei Messungen auf Objekte in sehr nahen Distanzen d Probleme auftreten, wenn reflektierte Laserstrahlen 3 nicht in einem für ein schnelles und sicheres Messen ausreichenden Masse zum Empfänger 7 gelangen können.

Figur 2 zeigt eine vergrösserte Detailansicht erster Mittel zum Auswählen von Strahlen der Vorrichtung aus Figur 1 und ein schematisch dargestelltes Bündel darauf projizierter Strahlen in Seitenansicht. Die ersten Mittel zum Auswählen von Strahlen weisen hier ein Endstück der Lichtleiterfaser 10 und die Blende 12 auf. Die Blende 12 wird von der Zentrierfassung 26 knapp über der Eintrittsfläche der Lichtleiterfaser 10 in der empfängerseitigen Brennebene 20 gehalten. Das Bündel auf die Blende 12 projizierten Strahlen enthält am Eckwürfelprisma 8 aus Figur 1 reflektierte Laserstrahlen 3 und Hintergrundstrahlen 28, die eingesammelt, gespiegelt und umgelenkt wurden. Dabei liegen die reflektierten Laserstrahlen 3 in Form eines dekollimierten Bündels mit einem gemeinsamen Sammelpunkt 29 vor, der hinter der empfängerseitigen Brennebene 20 hier im Endstück der Lichtleitfaser 10 liegt. Die Blende 12 weist eine längliche Blendenöffnung 13 auf, deren Öffnungsquerschnittfläche in Figur 3 sichtbar ist.

Figur 3 zeigt eine vergrösserte Detailansicht der ersten Mittel aus Figur 2 mit Teilen der Blende 12, der Lichtleitfaser 10 und der Zentrierfassung 26 zusammen mit einem schematisch dargestellten Abbild des Bündels projizierter Strahlen in Draufsicht. Das in Figur 2 dargestellte Bündel projizierter Strahlen umfasst reflektierte Strahlen 3 und Hintergrundstrahlen 28, die - wie aus Figur 1 ersichtlich - vom Objektiv 2 eingesammelt und von der Rückseite des zentralen Reflexionselements 21 umgelenkt wurden. Die Blendenöffnung 13 der Blende 12 ist hier konzentrisch zur Eintrittsfläche der Lichtleitfaser 10 angeordnet und weist eine zusammenhängende, längliche Querschnittsfläche auf, dessen beide Endabschnitte jeweils beidseitig Verbreiterungen aufweisen. Durch die Blendenöffnung 13 hindurch sind hier ein Teil der Zentrierfassung 26 und ein Teil der Eintrittsfläche der zylindrischen Lichtleiterfaser 10 sichtbar. Der Rand der Eintrittsfläche, der hier nicht sichtbar ist, ist durch eine punkt-strichlierte Linie dargestellt.

Ein Teil des Bündels projizierter Strahlen wird an der Blende 12 abgeblockt. Der andere Teil des Bündels kann über die zusammenhängende, längliche Blendenöffnung 13 der Blende 12 hindurch treten. Ein wesentlicher Teil davon trifft auf die Eintrittsfläche der Lichtleitfaser 10. Auf diese Art und Weise werden aus dem Bündel projizierter Strahlen die Strahlen aus einem bestimmten Bereich des Querschnitts des Bündels ausgewählt.

Da - wie aus Figur 1 ersichtlich - der grösste Teil der eingesammelten, am nahen Eckwürfelprisma 8 reflektierten Laserstrahlen 3 das in diesem Ausführungsbeispiel rechteckig geformte, zentrale Reflexionselement 21 nicht passieren kann, bilden die passierenden reflektierten Laserstrahlen 3 einen schmalen, rechteckigen Rahmen 30, der hier über eine Vielzahl von Punkten schematisch dargestellt ist. Die Form des Rahmens 30 wird hier insbesondere durch die Form des zentralen Reflexionselements 21, durch die Distanz zum Eckwürfelprisma 8 und vom Ausmass der Dekollimation des Bündels bestimmt. Da ausgesendete Laserstrahlen 1 durch das Eckwürfelprisma 8 gerichtet zurück reflektiert werden, ist der Rahmen 30 relativ scharf abgegrenzt.

Eingesammelte Hintergrundstrahlen 28 aus Figur 1 und 2 befinden sich innerhalb eines Bereiches, dessen Begrenzung in Figur 3 durch eine strichlierte Kreislinie 31 dargestellt ist. Die Form und Ausdehnung dieses Bereichs wird hier unter anderem durch das Objektiv 2 bestimmt. Wie aus Figur 2 ersichtlich, können über die Blende 12 und die Eintrittsfläche der Lichtleiterfaser 10 neben den am Eckwürfelprisma 8 reflektierten Laserstrahlen 3 auch Hintergrundstrahlen 28 ausgewählt und dann weitergeleitet werden.

Figur 4 zeigt einen in der Brennebene 20 aus Figur 2 liegenden Querschnitt durch das Bündel von Strahlen, die auf die Blende 12 projiziert werden. Die strichlierte Kreislinie 31 begrenzt den Querschnitt des Bündels. Aus dem Bündel projizierter Strahlen werden - wie aus Figur 3 zu ersehen - von der Blende 12 und der Lichtleitfaser 10 über die Blendenöffnung 13 bzw. die Eintrittsfläche Strahlen eines zusammenhängenden ersten Querschnittbereichs 34 ausgewählt. Dabei entspricht der erste Querschnittsbereich 34 mit den ausgewählten Strahlen hier der gemeinsamen Schnittfläche der Querschnittsfläche der Blendenöffnung 13 und der Eintrittsfläche der Lichtleiterfaser 10.

Der zusammenhängende erste Querschnittsbereich 34 weist hier in der Mitte einen ersten Abschnitt 5 und an den beiden Enden jeweils einen zweiten Abschnitt 6 auf. Die beiden zweiten Abschnitte 6 weisen - entsprechend den Verbreiterungen der Blendenöffnung 13 aus Figur 3 - eine grössere Ausdehnung als der erste Abschnitt 5 auf. Dennoch wird über die zweiten Abschnitte nur ein Bruchteil der eingesammelten, vom nahen Objekt reflektierten Laserstrahlen ausgewählt.

Wie aus Figur 1 und 3 zu ersehen, befinden die ausgewählten, von einem nahen Eckwürfelprisma 8 reflektierte Strahlen 3 innerhalb jeweils eines der beiden zweiten Abschnitte 6. Die ausgewählten Strahlen, die neben reflektierten Laserstrahlen 3 auch Hintergrundstrahlen 28 enthalten, werden über die Lichtleitfaser 10 zum Empfänger 7 weitergeleitet. Die ausgewählten Strahlen werden hier vom Empfänger 7 in ein elektrisches Signal umgewandelt, das neben einem eigentlich gewünschten Nutzsignal, das am Eckwürfelprisma 8 reflektierten Strahlen 3 zuordenbar ist, ein störendes Hintergrundrauschen aufweist, das den Hintergrundstrahlen 28 zuordenbar ist. Je kleiner das Verhältnis des Nutzsignals zum Hintergrundrauschen - die so genannte Signal-to-Noise-Ratio SNR - ist, umso geringer ist im Allgemeinen die von der Vorrichtung maximal messbare Distanz d.

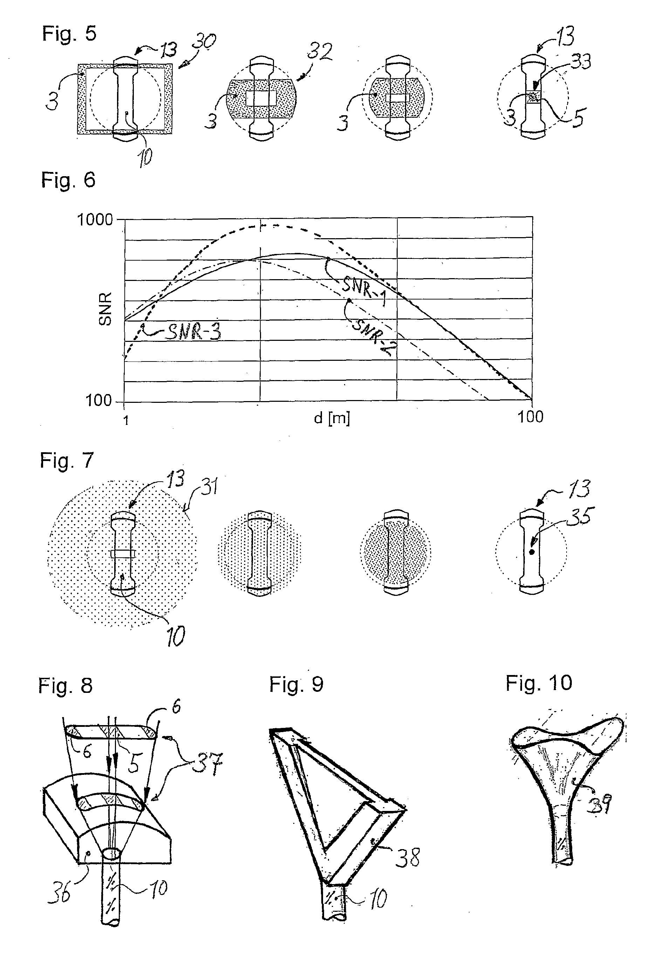

Figur 5 zeigt eine Gegenüberstellung von vier der Figur 3 entsprechenden, unterschiedlichen Draufsichten, wobei je nach Draufsicht die Distanz d des Eckwürfelprismas 8 aus Figur 1 einen Wert von in etwa einem, fünf, zwanzig oder grösser einhundert Metern aufweist.

Alle vier Draufsichten zeigen die nur teilweise sichtbare Eintrittsfläche der Lichtleitfaser 10 und die Blendenöffnung 13, die in der empfängerseitigen Brennebene 20 aus Figur 2 liegt. Jede Draufsicht zeigt auf die Blende 12 aus Figur 3 projizierte, eingesammelte Strahlen mit in Form eines dekollimierten Bündels vorliegenden, reflektierten Laserstrahlen 3. Da in Figur 1 ausgesendete Laserstrahlen 1 am Eckwürfelprisma 8 gerichtet reflektiert werden, sind hier die projizierten Abbilder der reflektierten Laserstrahlen 3 relativ scharf abgegrenzt.

Der ersten Draufsicht liegt - gleich wie in Figur 3 - die nahe Distanz d aus Figur 1 von etwa einem Meter zugrunde. Die reflektierten Laserstrahlen 3 bilden dabei den schmalen rechteckigen Rahmen 30 aus Figur 3. Die beiden vertikalen und horizontalen Rahmenteile weisen dabei nur eine Breite im Bereich von einigen wenigen Hundertsteln Millimetern auf. Die relativ grosse Erstreckung der Eintrittsfläche der zylindrischen Lichtleitfaser 10 mit einem einen Durchmesser von typischer Weise einem Viertel bis einem ganzen Millimeter ermöglicht hier zusammen mit der länglichen Ersteckung der Blendenöffnung 13, dass selbst weit vom Zentrum entfernte, reflektierte Laserstrahlen 3 - von Messungen auf nahe Eckwürfelprismen - zum Empfänger gelangen können. Da zudem die beiden horizontalen Rahmenteile reflektierter Laserstrahlen 3 hier in den Verbreiterungen der Blendenöffnung 13 zu liegen kommen, können zusätzlich reflektierten Laserstrahlen 3, die das zentrale Reflexionselement passieren konnten, in die Eintrittsfläche eintreten und auf diese Weise ausgewählt werden. Dadurch können auch nahe Distanzen d zuverlässig und schnell gemessen werden.

Der zweiten Draufsicht liegt eine mittlere Distanz d von etwa fünf Metern zugrunde. Die reflektierten Laserstrahlen 3 bilden einen halbrunden Rahmen 32 mit wesentlich breiteren Rahmenteilen, da die rechteckige Ausnehmung im Zentrum nur mehr ein Bruchteil der Rahmenfläche ausmacht. Die vertikalen Rahmenteile weisen an deren Aussenseite eine Rundung auf, da nicht mehr das gesamte dekollimierte Bündel ausgesendeter Laserstrahlen vom Eckwürfelprisma aus einer Distanz d von etwa fünf Metern gerichtet zurück reflektiert wird. Obwohl die breiten horizontalen Rahmenteile hier in einem Abschnitt ohne Verbreiterung zu liegen kommen, enthalten sie ausreichend reflektierte Laserstrahlen 3, um Messungen sicher und schnell durchführen zu können.

Je grösser die Distanz d zum Eckwürfelprisma 8 aus Figur 1 gewählt wird, umso kleiner wird das projizierte Bild mit der rechteckigen Ausnehmung des dekollimierten Bündels reflektierter Laserstrahlen 3.

Der vierten Draufsicht liegt eine ferne Distanz d von grösser einhundert Metern zugrunde. Der Querschnitt des dekollimierten Bündel eingesammelter und reflektierter Laserstrahlen 3 bildet hier in der empfängerseitigen Brennebene 20 aus Figur 1 eine Kreisfläche 33, die im Zentrum nach wie vor eine rechteckige, in Figur 5 nicht mehr sichtbare Ausnehmung aufweist. Die Kreisfläche 33 - mit vom fernen Eckwürfelprisma 8 reflektierten Laserstrahlen 3 - liegt zur Gänze innerhalb des ersten Abschnitts 5 des Querschnittsbereichs 34 aus Figur 4. Die Kreisfläche 33 weist einen Durchmesser von etwa einem Zwanzigstel Millimeter auf. Damit kann das gesamte dekollimierte Bündel reflektierter Laserstrahlen 3 durch den Mittenabschnitt der Blendeöffnung 13 - der hier dem ersten Abschnitt 5 aus Figur 4 entspricht - hindurch treten. Die Ausdehnung des Mittenabschnitts sollte zumindest diejenige der Kreisfläche 33 aufweisen.

In der Praxis wird die Ausdehnung des Mittenabschnitts der Blendenöffnung 13 mit Vorteil in etwa doppelt so gross wie die Ausdehnung des betreffenden Querschnitts des dekollimierten Bündels von einem fernen Eckwürfelprisma 8 reflektierter Laserstrahlen 3 gewählt.

Gleichzeitig werden ein Grossteil der in Figur 2 dargestellten, in Richtung Eintrittsfläche projizierten Hintergrundstrahlen 28 durch die Blende 12 abgeblockt und können so nicht mehr durch die Blendeöffnung 13 in die Eintrittsfläche der Lichtleitfaser 10 eintreten. Dadurch kann das Verhältnis zwischen den Hintergrundstrahlen 28 und den am Eckwürfelprisma reflektierten Laserstrahlen 3 verbessert werden, da diese im Gegensatz zu den Hintergrundstrahlen 28 alle in die Eintrittsfläche eintreten können. Dies ist insbesondere für Messungen auf ferne Objekte von Vorteil.

Figur 6 zeigt eine rein schematische, diagrammatische Gegenüberstellung dreier Kurven SNR-1, SNR-2 und SNR-3, welche jeweils in Abhängigkeit der Distanz d den Verlauf des Nutzsignal-Hintergrundrauschen-Verhältnisses SNR dreier elektrischer Signale darstellen, die drei unterschiedlichen Vorrichtungen zuordenbar sind. Der rechnerischen Bestimmung des jeweiligen Nutzsignal-Hintergrundrauschen-Verhältnisses SNR, liegt die Messanordnung aus Figur 1 zugrunde. Auf der Abszisse der diagrammatischen Gegenüberstellung ist logarithmisch die Distanz d des Eckwürfelreflektors 8 von der Vorrichtung in Metern aufgetragen. Auf der Ordinate ist der zugeordnete Wert des Nutzsignal-Hintergrundrauschen-Verhältnisses SNR aufgetragen.

Der Verlauf des Nutzsignal-Hintergrundrauschen-Verhältnisses SNR des vom Empfänger 7 aus Figur 1 erzeugten, elektrischen Signals hängt sehr stark von der jeweiligen Ausbildung und Dimensionierung der Teile der Vorrichtung zum Messen der Distanz ab. Insbesondere die Gestaltung des Empfängers und ein Vorsehen von Mitteln zum Auswählen können dabei einen wesentlichen Einfluss auf den Verlauf haben.

Die als durchgehende Linie dargestellte erste Kurve SNR-1 ist der erfindungsgemässen Vorrichtung zum Messen der Distanz aus den Figuren 1 bis 5 zugeordnet, bei welcher die ersten Mittel - die Blende 12 in Kombination mit der grossflächigen, dicken Lichtleitfaser 10 - zum Auswählen von Strahlen vorgesehen sind. Da sich die längliche Blendenöffnung 13 quer über die Eintrittsfläche der dicken Lichtleitfaser 10 erstreckt, können auch am nahen Eckwürfelprisma 8 reflektierte Laserstrahlen 3 in ausreichender Anzahl in die Lichtleitfaser eintreten. Dank den Verbreiterungen an den Enden der Blendenöffnung 13, können in ausreichendem Umfang reflektierte Laserstrahlen 3 in die Lichtleitfaser 10 eintreten. Ein ausreichend hohes Nutzsignal-Hintergrundrauschen-Verhältnis SNR von über einhundert ermöglicht zuverlässige Messungen auch auf Objekte in Distanzen d deutlich unterhalb einem Meter. Da zudem der erste Querschnittsbereich 34 aus Figur 4 im Vergleich zur Eintrittsfläche der Lichtleitfaser 10 klein ist, wird ein wesentlicher Teil des Hintergrundlichts 28 abgeblockt. Insbesondere bei Messungen auf ferne Objekte kann ein dominanter Teil der Hintergrundstrahlen 28 von der Blende 12 abgeblockt werden, wodurch das Nutzsignal-Hintergrundrauschen-Verhältnis SNR beim Messen auf Objekte ab einer bestimmten Distanz - im Vergleich zu einer Vorrichtung ohne Mittel zum Auswählen von Strahlen - deutlich erhöht wird. Dank den Mitteln kann hier sowohl in der Nähe zuverlässig und schnell gemessen als auch der Distanzbereich für Messungen auf ferne Objekte ausgeweitet werden.

Die als punkt-strichlierete Linie dargestellte zweite Kurve SNR-2 ist einer an sich bekannten, modifizierten Vorrichtung zugeordnet, bei der im Gegensatz zur erfindungsgemässen Vorrichtung der Figuren 1 bis 5 keine der Eintrittsfläche vorgelagerte Blende 12 vorgesehen ist und nur eine der dicken Lichtleitfaser 10 aus Figur 1 vergleichbare Lichtleitfaser aufweist. Mit der modifizierten Vorrichtung lassen sich gleichfalls Distanzen deutlich unterhalb eines Meters auf gerichtet reflektierende Objekte mit einem vergleichbaren Nutzsignal-Hintergrundrauschen-Verhältnis SNR zuverlässig und komfortabel messen. Hingegen ist beim Messen auf Objekte oberhalb einer gewissen Distanz d durch die fehlenden Blende 12 das Nutzsignal-Hintergrundrauschen-Verhältnis SNR deutlich niedriger, wodurch die maximal messbaren Distanzen d auf Objekte deutlich reduziert werden.

Die als strichlierete Linie dargestellte dritte Kurve SNR-3 ist einer weiteren modifizierten Vorrichtung zum Messen der Distanz zugeordnet, die im Gegensatz zur modifizierten Vorrichtung eine vergleichsweise dünne, zylindrische Lichtleitfaser aufweist. Der Durchmesser der dünnen Lichtleitfaser ist dabei für die vergleichende Darstellung von Figur 6 derart gewählt, dass die Eintrittsfläche der dünnen Lichtleitfaser in etwa der Fläche des von der Blende 12 nicht abgeschatteten Teils der Eintrittsfläche der dicken Lichtleitfaser 10 aus Figur 3 entspricht.

Über den - im Vergleich zu den zwei vorstehenden Ausführungsformen - kleineren Durchmesser können weniger vom nahen Objekt reflektierte Strahlen in die dünne Lichtleitfaser eintreten. Der in Richtung naher Distanzen d steil abfallende Verlauf der dritten Kurve SNR-3 verunmöglicht hier sogar zuverlässige Messungen auf Objekte in Distanzen deutlich unterhalb einem Meter. Durch die von dem zentralen Reflexionselement abgeblockten, am nahen Objekt reflektierten Strahlen hat die dünnere Lichtleitfaser mit deren kleiner Ersteckung beim Messen auf nahe Objekte deutliche Nachteile. Beim Messen auf ferne Objekte entspricht ab einer bestimmten Distanz die dritte Kurve SNR-3 hingegen der ersten Kurve SNR-1 der erfindungsgemässen Vorrichtung. Damit kann zumindest auf weit fernte Objekte zuverlässig gemessen werden.

Ein weiterer Vorteil einer erfindungsgemässen Vorrichtung, beispielsweise mit einer Blende 12 und dicken Lichtleitfaser 10, ist die - im Vergleich zu den zwei modifizierten Vorrichtungen - kleinere Signalvariation beim Messen auf Objekte in unterschiedlichen Distanzen von nah bis fern. Dies gilt insbesondere im Übergangsbereich zwischen nahen und fernen Objekten. Diese geringeren Unterschiede erlauben die Verwendung einfacherer elektrooptischer Einrichtungen zum Umwandeln ausgewählter Strahlen in elektrische Signale.

Figur 7 zeigt eine - der Figur 5 entsprechende - Gegenüberstellung von vier unterschiedlichen Draufsichten, wobei hier mit der erfindungsgemässen Vorrichtung im Gegensatz zu Figur 5 nicht auf das Eckwürfelprisma 8 aus Figur 1, sondern auf ein gestreut reflektierendes Objekt mit einer natürlich rauen Oberfläche gemessen wird, das jeweils entsprechend der Figur 5 zur Vorrichtung beabstandet ist.

In der jeweiligen Draufsicht werden die eingesammelten, an der rauen Oberfläche gestreut reflektierten Laserstrahlen auf die Blende 12 in der Brennebene 20 aus Figur 3 fokussiert. Da in Form eines dekollimierten Bündels ausgesendete Laserstrahlen 1 aus Figur 1 durch die raue Oberfläche gestreut reflektiert werden, sind die projizierten Abbilder der eingesammelten, gestreut reflektierten Laserstrahlen an deren Aussen- und Innenrand diffus unscharf abgegrenzt.

Der ersten Draufsicht liegt - entsprechend der Figur 5 - die nahe Distanz d von etwa einem Meter aus Figur 1 zugrunde. Die gestreut reflektierten Laserstrahlen füllen den durch die strichlierte Kreislinie 31 aus Figur 3 und 4 begrenzten Bereich für eingesammelte Strahlen mit Ausnahme einer rechteckigen Ausnehmung im Zentrum aus. Viele der an der rauen Oberfläche reflektierten Laserstrahlen, die das zentrale Reflexionselement passieren konnten, treten in die Eintrittsfläche ein und werden ausgewählt, so dass auch nahe Distanzen zuverlässig und schnell gemessen werden können.

Je grösser die Distanz zum Objekt mit der natürlich rauen Oberfläche gewählt wird, umso kleiner wird das Abbild reflektierter Laserstrahlen mit einer - im Vergleich zu Figur 5 ebenfalls kleineren - rechteckigen Ausnehmung.

Der vierten Draufsicht liegt eine ferne Distanz d von grösser einhundert Metern zugrunde. Der Querschnitt reflektierter und eingesammelter Laserstrahlen bildet hier in der empfängerseitigen Brennebene nur mehr eine punktförmige Fläche 35, die einen Durchmesser im Bereich von wenigen Mikrometern und im Zentrum praktisch keine Ausnehmung mehr aufweist.

Die hier für ein Messen auf gerichtet reflektierende Objekte optimierte Form der Blendenöffnung 13 ermöglicht es auch bei Messungen auf gestreut reflektierende Objekte einerseits die Variation des elektrischen Signals zwischen nahen und fernen Objekten zu reduzieren und andererseits auf nahe Objekte sicher und zuverlässig zu messen. Wie aus der ersten Draufsicht aus Figur 7 ersichtlich kann durch die beiden Verbreiterungen der Blendenöffnung 13 die mit abnehmender Distanz zunehmende Abschattung teilweise kompensiert werden. Eingesammelte in Richtung der Eintrittsfläche projizierte Hintergrundstrahlen 28 werden durch die Blendendöffnung 13 umgebende Blende 12 aus Figur 3 hier zu einem wesentlichen Teil abgeblockt und können so nicht mehr in die Eintrittsfläche der Lichtleitfaser 10 eintreten. Damit kann auch beim Messen an gestreut reflektierenden Objekten das Verhältnis zwischen gestreut reflektierten Laserstrahlen und Hintergrundstrahlen über die Blende 12 gesteigert werden. Dies ist insbesondere für Messungen auf ferne Objekte von Vorteil.

Figur 8 zeigt einen schematisch dargestellten Teil des Bündels projizierter Strahlen aus Figur 2 und zweite Mittel einer erfindungsgemässen Vorrichtung zum Auswählen von Strahlen des Bündels in einer Schrägansicht. Die dicke Lichtleitfaser 10 aus Figur 2 und eine Zylinderlinse 36, die anstatt der Blende 12 aus Figur 2 oberhalb deren Eintrittsfläche angeordnet ist, bilden hier die zweiten Mittel zum Auswählen von Strahlen eines zusammenhängenden zweiten Querschnittsbereichs 37 des Querschnitts des Bündels projizierter Strahlen. Der zweite Querschnittsbereich 37 umfasst von der Vorrichtung ausgesendete, an einem Objekt reflektierte Laserstrahlen 3 und Hintergrundstrahlen 28 aus Figur 1, die vom Objektiv 2 eingesammelt wurden. Die Eintrittsfläche der Lichtleitfaser 10 ist mit Vorteil zwischen der Zylinderlinse 36 und deren Brennpunkt angeordnet.

Ein hier nicht dargestellter Teil des Bündels projizierter Strahlen geht entweder an der Zylinderlinse 36 vorbei oder trifft auf diese und verfehlt jedoch die Eintrittsfläche der Lichtleiterfaser 10. Ein hier schematisch dargestellter anderer Teil des Bündels projizierter Strahlen trifft auf die Zylinderlinse 36, wird von dieser in Richtung der Eintrittsfläche gebrochen, kann in die Lichtleitfaser 10 eintreten und zum Empfänger weitergeleitet werden. Durch eine solche Kombination einer Zylinderlinse 36 und der Lichtleitfaser 10 werden aus dem eingesammelten, projizierten Bündel Strahlen aus einem bestimmten Bereich des Querschnitts des Bündels ausgewählt.

Der durch die zweiten Mittel ausgewählte zusammenhängende zweite Querschnittsbereich 37 weist eine längliche Form mit einer einzigen im Wesentlichen konstanten Ausdehnung über dessen Längsersteckung auf. Die beiden Enden sind bedingt durch die zylindrische Lichtleitfaser 10 jeweils mit einer Rundung versehen. Neben den Einfallswinkeln der projizierten Strahlen wird die Länge und die Ausdehnung in der Breite des Querschnittsbereichs 37 im Wesentlichen von der Brechkraft der Zylinderlinse 36 bzw. vom Durchmesser der Lichtleitfaser 10 bestimmt.

Der zweite Querschnittsbereich 37 weist hier - vergleichbar dem ersten Querschnittsbereich 34 aus Figur 4 - in der Mitte einen ersten Abschnitt 5 und an den beiden Enden jeweils einen zweiten Abschnitt 6 auf. Im Gegensatz zu Figur 4 weisen die beiden zweiten Abschnitte 6 hier dieselbe Ausdehnung wie der erste Abschnitt 5 auf.

Je nach Ausbildung erfindungsgemässer Vorrichtungen können ausgewählte Querschnittsbereiche von Vorteil sein, die auch mehr wie zwei zweite Abschnitte aufweisen. Diese können beispielsweise sternförmig oder in Form eines vierblättrigen Kleeblatts um den ersten Abschnitt herum angeordnet sein. Figur 9 zeigt dritte Mittel zum Auswählen von Strahlen einer erfindungsgemässen Vorrichtung zum Messen der Distanz in einer Schrägansicht.

Die Lichtleitfaser 10 und ein als Lichteinfang wirkendes, trichterförmiges Bauteil 38 aus Glas oder optisch transparentem Kunststoff, das anstatt der Zylinderlinse 36 oberhalb deren Eintrittsfläche angeordnet ist, bilden hier die dritten Mittel zum Auswählen von Strahlen eines zusammenhängenden Querschnittsbereichs eines Bündels eingesammelter Strahlen. Die Eintrittsseite des trichterförmigen Bauteils 38 wird in einer erfindungsgemässen Vorrichtung - entsprechend der Blende 12 aus Figur 2 - in der empfängerseitigen Brennebene 20 angeordnet. Das trichterförmige Bauteil 38 kann gegebenenfalls zusätzlich wenigstens teilweise verspiegelt sein. Da der vom trichterförmigen Bauteil 38 ausgewählte Querschnittsbereich im Wesentlichen dem ersten Querschnittsbereich aus Figur 4 entspricht, weist es eine der Blende 12 aus Figur 3 vergleichbare Wirkung auf.

Figur 10 zeigt vierte Mittel zum Auswählen von Strahlen einer erfindungsgemässen Vorrichtung in einer Schrägansicht, die von einem trichterförmig zusammen gequetschten Endstück 39 einer Lichtleitfaser gebildet werden. Die deformierte Eintrittsfläche des zusammen gequetschten Endstück 39 wird in einer erfindungsgemässen Vorrichtung - entsprechend der Blende 12 aus Figur 2 - in der empfängerseitigen Brennebene 20 angeordnet. Die Form der deformierten Eintrittsfläche und die Form der Blendenöffnung 13 bzw. des Eintrittsseite des trichterförmigen Bauteils 38 aus Figur 9 weisen eine vergleichbare Wirkung auf.

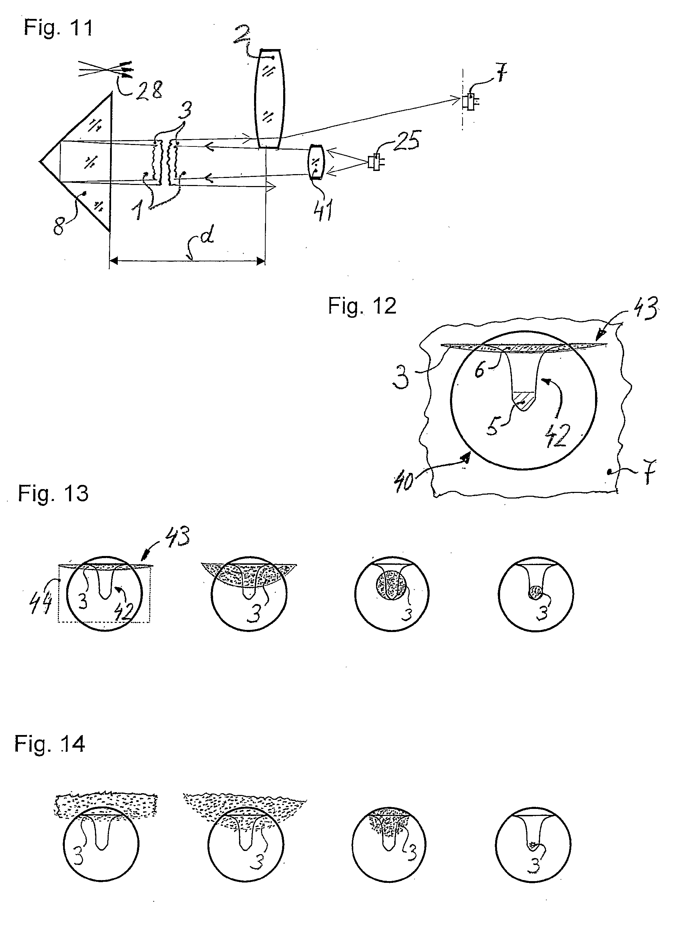

Figur 11 zeigt eine der Figur 1 entsprechende Messanordnung mit einem gerichtet reflektierenden Objekt und einer erfindungsgemässen Vorrichtung zum Messen der Distanz von biaxialer Grundform.

Wie in Figur 1 wird hier auf ein als Eckwürfelprisma 8 ausgebildetes, gerichtet reflektierendes Objekt gemessen, das sich in einer veränderlichen Distanz d zur Vorrichtung befindet. Das Objekt wird hier - wie in Figur 1 - koinzidierend angemessen. Dabei ist Vorrichtung derart auf das Eckwürfelprisma 8 ausgerichtet, dass sich das Reflexionszentrum des Eckwürfelprismas 8 auf der Achse eines Bündels von der Vorrichtung modulierter und ausgesendeter Laserstrahlen 1 befindet.

Die biaxiale Vorrichtung weist hier ein Objektiv 2 zum Einsammeln von Strahlen, einen als fünfte Mittel zum Auswählen von Strahlen ausgebildeten Empfänger 7, ein weiteres Objektiv 41 mit rechteckiger Öffnung und eine Laserdiode 25 auf.

Die Emissionsfläche der Laserdiode 25 zum Erzeugen der modulierten Laserstrahlen ist auch hier wesentlich vor der Brennebene des Objektivs 41 angeordnet, wodurch die ausgesendeten Laserstrahlen 1 in Form eines dekollimierten, deutlich divergenten Bündels - das dem dekollimierten Bündel aus Figur 1 entspricht - auf das Eckwürfelprisma 8 projiziert werden.

Vom Objektiv 2 werden Strahlen eingesammelt, die wenigstens einen Teil der am Eckwürfelprisma 8 reflektierten Laserstrahlen 3 sowie Hintergrundstrahlen 28 umfassen. Die am Eckwürfelprisma 8 reflektierten Laserstrahlen 3 liegen dabei in Form eines dekollimierten Bündels vor. Die eingesammelten Strahlen werden in Richtung des Empfängers 7 projiziert, der hier in der Nähe der Brennebene 20 des Objektivs 2 angeordnet ist.

Wie bei der Vorrichtung aus Figur 1 treten beim Messen auf Objekte in sehr nahen Distanzen d - hier allerdings aufgrund der Parallaxe biaxialer Vorrichtungen - Probleme auf.

Figur 12 zeigt schematisch dargestellt eine vergrösserte Detailansicht der fünften Mittel zum Auswählen von Strahlen aus Figur 11 zusammen mit einem Abbild des Bündels eingesammelter, von einem nahen Objekt gerichtet reflektierter Strahlen in Draufsicht. Der Empfänger 7 weist einen Detektor 40 mit einer aktiven Detektorfläche 42 auf. Die zusammenhängende Detektorfläche 42 weist hier eine länglich progressiv auseinander laufende, trompetenförmige Form auf.

Da - wie aus Figur 11 ersichtlich - der grösste Teil am nahen Eckwürfelprisma 8 reflektierter Laserstrahlen 3 vom Objektiv 2 nicht eingesammelt werden kann, bilden hier die reflektierten Laserstrahlen 3 einen schmalen, scharf abgegrenzten Kreisabschnitt 43, der gleichfalls über eine Vielzahl von Punkten schematisch dargestellt ist. Durch die rechteckige Öffnung des weiteren Objektivs 41 weist das Bündel ausgesendeter Laserstrahlen 1 einen rechteckigen Querschnitt auf, der die gerade Begrenzungslinie des Kreisabschnitts 43 verursacht. Die runde Begrenzungslinie geht auf die kreisförmige Öffnung des Objektivs 2 zurück. Gemäss Figur 11 werden aber auch über das Objektiv 2 Hintergrundstrahlen 28 eingesammelt und in Richtung des Empfängers 7 projiziert. Diese treffen auf den gesamten hier dargestellten Teils des Empfängers 7. Neben den am Eckwürfelprisma 8 reflektierten Laserstrahlen 3 werden dadurch auch auf die aktive Detektorfläche 42 fokussierte Hintergrundstrahlen 28 detektiert.

Über die Detektorfläche 42 werden von der erfindungsgemässen Vorrichtung aus Figur 11 aus dem Bündel eingesammelter Strahlen gezielt Strahlen aus einem Querschnittsbereich des Bündels ausgewählt, der mit der aktiven Detektorfläche 42 zusammenfällt. Nur dieser Teil des Bündels eingesammelter Strahlen wird vom Empfänger 7 in elektrische Signale umgewandelt. In diesem Ausführungsbeispiel entspricht der Querschnittsbereich mit den ausgewählten Strahlen der Detektorfläche 42.

Der Querschnittsbereich weist hier einenends einen ersten Abschnitt 5 und anderenends einen zweiten Abschnitt 6 auf. Ausgewählte, von einem fernen Eckwürfelprisma 8 reflektierte Laserstrahlen 3 liegen innerhalb des ersten Abschnitts 5, während ausgewählte, von einem nahen Eckwürfelprisma 8 reflektierte Laserstrahlen 3 innerhalb des zweiten Abschnitts 6 liegen. Der zweite Abschnitt 6 weist hier eine grössere Ausdehnung als der erste Abschnitt 5 auf, wodurch mehr der wenigen am sehr nahen Eckwürfelprisma 8 eingesammelten, reflektierten Laserstrahlen 3 aus Figur 11 detektiert werden können.

Figur 13 und 14 zeigen jeweils eine Gegenüberstellung, welche jeweils der Gegenüberstellung der Figur 5 bzw. 7 entspricht. Anstelle von Draufsichten auf Mittel zum Auswählen von Strahlen der Vorrichtung von monoaxialer Grundform aus Figur 1 zeigen Figur 13 und 14 Draufsichten auf Mittel zum Auswählen von Strahlen der Vorrichtung von biaxialer Grundform aus Figur 11.

Die Draufsichten von Figur 13 zeigen scharf abgegrenzte Abbilder am Eckwürfelprisma 8 aus Figur 11 gerichtet reflektierter Laserstrahlen 3. Die Draufsichten von Figur 14 hingegen zeigen diffuse Abbilder an einer natürlich rauen Oberfläche gestreut reflektierter Laserstrahlen 3.

Die erste Draufsicht von Figur 13 zeigt einen rechteckigen Rahmen 44, der dem rechteckigen Querschnitt des dekollimierten Bündels ausgesendeter Laserstrahlen 1 aus Figur 11 entspricht. Infolge des Abstand zwischen dem empfangsseitigen und dem sendeseitigen Objektiv 2 bzw. 41 werden die eingesammelten, gerichtet reflektierten Laserstrahlen 3 durch den Rand des runden Objektivs 2 begrenzt, so dass bei nahen Distanzen nur der Kreisabschnitt 43 auf den Empfänger 7 aus Figur 12 projiziert wird.

Bei einer Distanz d von etwa einem Meter - welche der ersten Draufsicht zugrunde liegt - ist der Kreisabschnitt 43 hier sehr schmal. Da gemäss der Erfindung in diesem Bereich die Detektorfläche 42 jedoch stark ausgedehnt ist, werden dennoch ausreichend am Eckwürfelprisma 8 reflektierte Laserstrahlen 3 detektiert, um zuverlässig und schnell Messen zu können.

Bei einer Distanz d von etwa 5 Metern - welche der zweiten Draufsicht zugrunde liegt - fällt der Kreisabschnitt 43 deutlich breiter aus und wandert in Richtung der Achse des Bündels ausgesendeter Laserstrahlen 1 aus Figur 11. Die dadurch zunehmende Menge eingesammelter, reflektierten Laserstrahlen 3 kann teilweise durch die in derselben Richtung abnehmende Ausdehnung der Detektorfläche 42 teilweise kompensiert werden.

Bei einer Distanz d von etwa 20 Metern - welche der dritten Draufsicht zugrunde liegt - bildet das Abbild reflektierter Laserstrahlen 3 bereits eine ganze Kreisfläche.

Bei einer Distanz d von etwa einhundert Metern - welche der vierten Draufsicht zugrunde liegt - verschiebt sich die Position des Abbilds reflektierter Laserstrahlen 3 auch bei weiter zunehmender Distanz d nicht mehr. Alle eingesammelten, reflektierten Laserstrahlen 3 treffen nun auf den Teil der Detektorfläche 42 mit der kleinsten Ausdehnung. Bei noch grösseren Distanzen nimmt dann das umgewandelte, elektrische Signal quadratisch mit zunehmender Distanz ab.

## Patentansprüche

1. Vorrichtung zum Messen der Distanz (d) zu fernen und nahen Objekten (8), an denen von der Vorrichtung modulierte und ausgesendete Laserstrahlen (1) reflektiert werden, mit
- einem gemeinsamen Objektiv (2) zum Aussenden der Laserstrahlen (1) und zum Einsammeln von Strahlen, die an den Objekten reflektierte Laserstrahlen (3) und Hindergrundstrahlen (28) umfassen,
- Mitteln (12, 36, 38, 39, 40) zum Auswählen von Strahlen eines zusammenhängenden Querschnittbereichs (34, 37) eines Bündels eingesammelter Strahlen, der einen ersten (5) und wenigstens einen zweiten Abschnitt (6) aufweist, wobei dem ersten (5) von einem fernen und dem wenigstens einen zweiten Abschnitt (6) von einem nahen Objekt reflektierte Laserstrahlen (3) zugeordnet sind und über den zweiten Abschnitt (6) nur ein Bruchteil der eingesammelten, vom nahen Objekt reflektierten Laserstrahlen (1) ausgewählt wird, und
- einem Empfänger (7) zum Umwandeln ausgewählter Strahlen in ein einziges elektrisches Signal, über das mit Hilfe der Ausbreitungsgeschwindigkeit optischer Strahlen die Distanz (d) bestimmbar ist,
**dadurch gekennzeichnet, dass** die Mittel (12, 36, 38, 39, 40) derart ausgebildet sind, dass der wenigstens eine zweite Abschnitt (6) mindestens die Ausdehnung des ersten Abschnitts (5) aufweist.

2. Vorrichtung nach Anspruch 1 zum Messen der Distanz (d) zu einem gerichtet reflektierenden Objekt (8), **dadurch gekennzeichnet, dass** die ausgesendeten Laserstrahlen (1) als dekollimiertes Strahlenbündel ausgebildet sind.

3. Vorrichtung nach Anspruch 1 oder 2, **dadurch gekennzeichnet, dass** die Mittel (12, 36, 38, 39, 40) derart ausgebildet sind, dass der ausgewählte Querschnittsbereich (34) wenigstens zwei zweite Abschnitte (6) aufweist, zwischen denen ein einziger erster Abschnitt (5) angeordnet ist, und dass gegebenenfalls der ausgewählte Querschnittsbereich (34) symmetrisch ausgebildet ist.

4. Vorrichtung zum Messen der Distanz (d) zu fernen und nahen, gerichtet reflektierenden Objekten (8), an denen von der Vorrichtung modulierte und ausgesendete Laserstrahlen (1), die als dekollimiertes Strahlenbündel ausgebildet sind, reflektiert werden, mit
- einem Objektiv (2) zum Einsammeln von Strahlen, die an den Objekten reflektierte Laserstrahlen (3) und Hindergrundstrahlen (28) umfassen,
- einem weiteren Objektiv (41) zum Aussenden der Laserstrahlen (1),
- Mitteln (40) zum Auswählen von Strahlen eines zusammenhängenden Querschnittbereichs eines Bündels eingesammelter Strahlen, der einen ersten (5) und einen zweiten Abschnitt (6) aufweist, wobei dem ersten (5) von einem fernen und dem zweiten Abschnitt (6) von einem nahen Objekt reflektierte Laserstrahlen (3) zugeordnet sind und über den wenigstens einen zweiten Abschnitt (6) nur ein Bruchteil der eingesammelten, vom nahen Objekt reflektierten Laserstrahlen (1) ausgewählt wird, und
- einem Empfänger (7) zum Umwandeln ausgewählter Strahlen in ein einziges elektrisches Signal, über das mit Hilfe der Ausbreitungsgeschwindigkeit optischer Strahlen die Distanz (d) bestimmbar ist,
**dadurch gekennzeichnet, dass** die Mittel (40) derart ausgebildet sind, dass der zweite Abschnitt (6) mindestens die Ausdehnung des ersten Abschnitts (5) aufweist.

5. Vorrichtung nach einem der Ansprüche 1 bis 4, **dadurch gekennzeichnet, dass** die Mittel (12, 38, 39, 40) derart ausgebildet sind, dass der zweite Abschnitt (6) eine grössere Ausdehnung als der erste Abschnitt (5) aufweist.

6. Vorrichtung nach Anspruch 5, **dadurch gekennzeichnet, dass** die Mittel (12, 38, 39, 40) derart ausgebildet sind, dass sich der ausgewählte Querschnittsbereich (34) ausgehend vom zweiten Abschnitt (6) hin zum ersten Abschnitt (5) derart verjüngt, dass beim Messen auf das gerichtet reflektierende Objekt (8) in unterschiedlichen Distanzen (d) von nah bis fern die jeweiligen Unterschiede zwischen der Intensität ausgewählter Strahlen reduziert werden.

7. Vorrichtung nach einem der Ansprüche 1 bis 6 zum Messen auf ein gerichtet reflektierendes Objekt (8) und auf ein gestreut reflektierendes Objekt, **dadurch gekennzeichnet, dass** zum Messen auf das gestreut reflektierende Objekt die ausgesendeten Laserstrahlen als kollimiertes Strahlenbündel ausgebildet sind.

8. Vorrichtung nach Anspruch 7, **dadurch gekennzeichnet, dass** die Mittel (12, 36, 38, 39, 40) derart ausgebildet sind, dass sich der ausgewählte Querschnittsbereich (34) ausgehend vom zweiten (6) hin zum ersten Abschnitt (5) derart verjüngt, dass beim Messen auf das gerichtet reflektierende (8) und auf das gestreut reflektierende Objekt jeweils in unterschiedlichen Distanzen (d) von nah bis fern die jeweiligen Unterschiede zwischen der Intensität ausgewählter Strahlen reduziert werden.

9. Vorrichtung nach einen der Ansprüche 1 bis 8, **dadurch gekennzeichnet, dass** wenigstens eine Multimode-Lichtleitfaser (10) zum Weiterleiten ausgewählter Strahlen vorgesehen ist.

10. Vorrichtung nach Anspruch 9, **dadurch gekennzeichnet, dass** die Mittel (39) zum Auswählen als länglich zusammen gequetschtes Endstück einer Multimode-Lichtleitfaser (10) ausgebildet sind.

11. Vorrichtung nach einem der Ansprüche 1 bis 9, **dadurch gekennzeichnet, dass** die Mittel (12) zum Auswählen als Blende, beispielsweise als Schlitzblende oder als Kreuzschlitzblende, gegebenenfalls in Kombination mit der Eintrittsfläche der Multimode-Lichtleitfaser (10) ausgebildet sind.

12. Vorrichtung nach einem der Ansprüche 1 bis 9, **dadurch gekennzeichnet, dass** die Mittel zum Auswählen als reflektives, refraktives oder diffraktives optisches Element, beispielsweise als Zylinderlinse (36), Freiformlinse oder, gegebenenfalls verspiegelter, Lichteinfangtrichter, gegebenenfalls vor der Eintrittsfläche der Multimode-Lichtleitfaser (10) angeordnet, ausgebildet sind.

13. Vorrichtung nach einen der Ansprüche 1 bis 9, **dadurch gekennzeichnet, dass** die Mittel zum Auswählen als Detektor (40) mit einer länglichen, aktiven Detektionsfläche (42) ausgebildet sind.

14. Vorrichtung nach einem der Ansprüche 1 bis 13, **dadurch gekennzeichnet, dass** Mittel (12, 36, 38, 39, 40) zum Auswählen in der Nähe der Brennebene (20) des Objektivs (2) zum Einsammeln von Strahlen angeordnet ist.

15. Vorrichtung nach einem der Ansprüche 1 bis 14, **dadurch gekennzeichnet, dass** ein Okular (23) vorgesehen ist, wobei das Okular (23) und das Objektiv (41) ein Fernrohr zum Anzielen der Objekte (8) bilden.

## Claims

1. Device for measuring the distance (d) to distant and near objects (8) on which laser beams (1) modulated and emitted by the device are reflected, having
- a common lens (2) for emitting the laser beams (1) and for collecting beams which comprise laser beams (3) reflected on the objects and background beams (28),
- means (12, 36, 38, 39, 40) for selecting the beams of a continuous cross-sectional area (34, 37) of a bundle of collected beams which has a first (5) and at least a second section (6), the first section (5) being assigned laser beams (3) reflected by a distant object and the at least one second section (6) being assigned laser beams (3) reflected by a near object, and only a fraction of the collected laser beams (1) reflected by the near object is selected via the second section (6), and
- a receiver (7) for converting selected beams into a single electrical signal via which it is possible to determine the distance (d) with the aid of the propagation velocity of optical beams,
**characterized in that** the means (12, 36, 38, 39, 40) are designed in such a way that the at least one second section (6) has at least the extent of the first section (5).

2. Device according to Claim 1 for measuring the distance (d) to a directionally reflecting object (8), **characterized in that** the emitted laser beams (1) are formed as a decollimated beam bundle.

3. Device according to Claim 1 or 2, **characterized in that** the means (12, 36, 38, 39, 40) are designed in such a way that the selected cross-sectional area (34) has at least two second sections (6) between which a single first section (5) is arranged, and **in that** the selected cross-sectional area (34) is optionally of symmetrical design.

4. Device for measuring the distance (d) to distant and near, directionally reflecting objects (8) on which there are reflected laser beams (1) which are modulated and emitted by the device and are formed as a decollimated beam bundle, having
- a lens (1) for collecting beams which comprise laser beams (3) reflected on the objects, and background beams (28),
- a further lens (41) for emitting the laser beams (1),
- means (40) for selecting beams of a continuous cross-sectional area of a bundle of collected beams which has a first (5) and a second section (6), the first section (5) being assigned laser beams (3) reflected by a distant object and the second section (6) being assigned laser beams (3) reflected by a near object, and only a fraction of the collected laser beams (1) reflected by the near object is selected via the at least one second section (6), and
- a receiver (7) for converting selected beams into a single electrical signal via which it is possible to determine the distance (d) with the aid of the propagation velocity of optical beams,
**characterized in that** the means (40) are designed in such a way that the second section (6) has at least the extent of the first section (5).

5. Device according to one of Claims 1 to 4, **characterized in that** the means (12, 38, 39, 40) are designed in such a way that the second section (6) has a greater extent than the first section (5).

6. Device according to Claim 5, **characterized in that** the means (12, 38, 39, 40) are designed in such a way that, starting from the second section (6), the selected cross-sectional area (34) tapers away to the first section (5) in such a way that the respective differences between the intensity of selected beams are reduced when measurements are made from near to distant at different distances (d) with reference to the directionally reflecting object (8).

7. Device according to one of Claims 1 to 6 for measuring with reference to a directionally reflecting object (8) and to an object reflecting in a scattered fashion, **characterized in that** the emitted laser beams are formed as a collimated beam bundle in order to measure with reference to the object reflecting in a scattered fashion.

8. Device according to Claim 7, **characterized in that** the means (12, 36, 38, 39, 40) are designed in such a way that, starting from the second section (6), the selected cross-sectional area (34) tapers away to the first section (5) in such a way that the respective differences between the intensity of selected beams are reduced in each case when measurements are made from near to distant at different distances (d) with reference to the directionally reflecting object (8) and to the object reflecting in a scattered fashion.

9. Device according to one of Claims 1 to 8, **characterized in that** at least one multimode optical fibre (10) is provided for routing selected beams.

10. Device according to Claim 9, **characterized in that** the means (39) for selecting are designed as an end piece of a multimode optical fibre (10) which is pinched together lengthwise.

11. Device according to one of Claims 1 to 9, **characterized in that** the means (12) for selecting are designed as a diaphragm, for example as a slit diaphragm or as a cross-slit diaphragm, optionally in combination with the entrance face of the multimode optical fibre (10).

12. Device according to one of Claims 1 to 9, **characterized in that** the means for selecting are designed as a reflective, refractive or diffractive optical element, for example as a cylindrical lens (36), a free-form lens or an optionally reflected light collecting funnel, optionally in front of the entrance face of the multimode optical fibre (10).

13. Device according to one of Claims 1 to 9, **characterized in that** the means for selecting are designed as a detector (40) with an elongated, active detection surface (42).

14. Device according to one of Claims 1 to 13, **characterized in that** means (12, 36, 38, 39, 40) for selecting are arranged in the vicinity of the focal plane (20) of the lens (2) for collecting beams.

15. Device according to one of Claims 1 to 14, **characterized in that** an eyepiece (23) is provided, the eyepiece (23) and the lens (41) forming a telescope for aiming at the objects (8).

## Revendications

1. Dispositif pour mesurer la distance (d) d'objets éloignés et proches (8) sur lesquels des rayons laser (1) émis et modulés par le dispositif sont réfléchis, avec
- un objectif commun (2) pour émettre les rayons laser (1) et pour collecter des rayons qui comprennent les rayons laser (3) réfléchis sur les objets et des rayons de fond (28),
- des moyens (12, 36, 38, 39, 40) pour sélectionner des rayons d'une zone de section transversale cohérente (34, 37) d'un faisceau de rayons collectés qui présente une première section (5) et au moins une seconde section (6), cependant que des rayons laser (3) réfléchis par un objet éloigné sont associés à la première section (5) et par un objet proche à la seconde section qui existe au moins (6) et que seulement une fraction des rayons laser (1) collectés réfléchis par l'objet proche est sélectionnée sur la seconde section (6) et
- un récepteur (7) pour convertir des rayons sélectionnés en un seul signal électrique par lequel la distance (d) peut être déterminée à l'aide de la vitesse de propagation de faisceaux optiques,
**caractérisé en ce que** les moyens (12, 36, 38, 39, 40) sont configurés tels que la seconde section qui existe au moins (6) présente au moins l'extension de la première section (5).

2. Dispositif selon la revendication 1 pour mesurer la distance (d) avec un objet réfléchissant de manière dirigée (8), **caractérisé en ce que** les rayons laser émis (1) sont configurés comme un faisceau de rayons décollimatés.

3. Dispositif selon la revendication 1 ou 2, **caractérisé en ce que** les moyens (12, 36, 38, 39, 40) sont configurés tels que la section transversale sélectionnée (34) présente au moins deux secondes sections (6) entre lesquelles une seule première section (5) est placée et que, le cas échéant, la section transversale sélectionnée (34) est configurée symétrique.

4. Dispositif pour mesurer la distance (d) d'objets éloignés et proches réfléchissant de manière dirigée (8) sur lesquels des rayons laser émis et modulés par le dispositif (1), qui sont configurés comme faisceau de rayons décollimatés, sont réfléchis, avec
- un objectif (2) pour collecter des rayons qui comprennent les rayons laser (3) réfléchis sur les objets et des rayons de fond (28),
- un autre objectif (41) pour émettre les rayons laser (1),
- des moyens (40) pour sélectionner des rayons d'une zone de section transversale cohérente d'un faisceau de rayons collectés qui présente une première section (5) et une seconde section (6), cependant que des rayons laser (3) réfléchis par un objet éloigné sont associés à la première section (5) et par un objet proche à la seconde section (6) et que seulement une fraction des rayons laser (1) réfléchis par l'objet proche est sélectionnée sur la seconde section qui existe au moins (6) et
- un récepteur (7) pour convertir des rayons sélectionnés en un seul signal électrique par lequel la distance (d) peut être déterminée à l'aide de la vitesse de propagation de faisceaux optiques,
**caractérisé en ce que** les moyens (40) sont configurés tels que la seconde section (6) présente au moins l'extension de la première section (5).

5. Dispositif selon l'une des revendications 1 à 4, **caractérisé en ce que** les moyens (12, 38, 39, 40) sont configurés tels que la seconde section (6) présente une plus grande extension que la première section (5).

6. Dispositif selon la revendication 5, **caractérisé en ce que** les moyens (12, 38, 39, 40) sont configurés tels que la section transversale sélectionnée (34) s'effile en partant de la seconde section (6) vers la première section (5) de telle manière que lors de la mesure sur l'objet réfléchissant de manière dirigée (8) les différences respectives entre l'intensité de rayons sélectionnés sont réduites à différentes distances (d) de proche à éloigné.

7. Dispositif selon l'une des revendications 1 à 6 pour mesurer sur un objet réfléchissant de manière dirigée (8) et sur un objet réfléchissant de manière dispersée, **caractérisé en ce que** pour la mesure sur l'objet réfléchissant de manière dispersée les rayons laser émis sont configurés comme un faisceau de rayons collimatés.

8. Dispositif selon la revendication 7, **caractérisé en ce que** les moyens (12, 38, 39, 40) sont configurés tels que la section transversale sélectionnée (34) s'effile en partant de la seconde section (6) vers la première section (5) de telle manière que lors de la mesure sur l'objet réfléchissant de manière dirigée (8) et sur l'objet réfléchissant de manière dispersée, les différences respectives entre l'intensité de rayons sélectionnés sont réduites respectivement en différentes distances (d) de proche à éloigné.

9. Dispositif selon l'une des revendications 1 à 8, **caractérisé en ce qu'**au moins une fibre de guidage de lumière multimode (10) est prévue pour transmettre des rayons sélectionnés.

10. Dispositif selon la revendication 9, **caractérisé en ce que** les moyens (39) pour sélectionner sont configurés comme une pièce d'extrémité écrasée allongée d'une fibre de guidage de lumière multimode.

11. Dispositif selon l'une des revendications 1 à 9, **caractérisé en ce que** les moyens (12) pour sélectionner sont configurés par exemple comme diaphragme, par exemple comme diaphragme à fente ou comme diaphragme à fente cruciforme, le cas échéant en combinaison avec la surface d'entrée de la fibre de guidage de lumière multimode.

12. Dispositif selon l'une des revendications 1 à 9, **caractérisé en ce que** les moyens (12) pour sélectionner sont configurés comme un élément optique réflectif, réfractif ou diffractif, par exemple comme une lentille cylindrique (36), une lentille de forme libre ou, le cas échéant, comme un entonnoir de capture de lumière à couche réfléchissante, placé le cas échéant devant la surface d'entrée de la fibre de guidage de lumière multimode (10).

13. Dispositif selon l'une des revendications 1 à 9, **caractérisé en ce que** les moyens (12) pour sélectionner sont configurés comme un détecteur (40) avec une surface de détection active allongée (42).

14. Dispositif selon l'une des revendications 1 à 13, **caractérisé en ce que** des moyens (12, 36, 38, 39, 40) pour sélectionner sont placés à proximité du plan caustique (20) de l'objectif (2) pour collecter des rayons.

15. Dispositif selon l'une des revendications 1 à 14, **caractérisé en ce qu'**un oculaire (23) est prévu, cependant que l'oculaire (23) et l'objectif (41) forment une lunette de visée pour viser les objets (8).
